# EUROPEAN PATENT APPLICATION

(11) **EP 4 678 433 A1**
(43) Date of publication of application: **14.01.2026**
(21) Application number: 24766203.4
(22) Date of filing: 17.01.2024
(51) Int. Cl.: B60H 1/32, F25B 40/06, B60H 1/00

(54) **AIR CONDITIONING SYSTEM OF VEHICLE, AND VEHICLE**

(30) Priority: 06.03.2023 CN 202310241178
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WANG, Jian, Ningbo, Zhejiang 315899 (CN); XIA, Songyong, Ningbo, Zhejiang 315899 (CN); LIU, Jinsong, Ningbo, Zhejiang 315899 (CN); DAI, Lihui, Ningbo, Zhejiang 315899 (CN); XING, Xiaodong, Ningbo, Zhejiang 315899 (CN); QU, Hongfang, Ningbo, Zhejiang 315899 (CN)
(74) Representative: Kraus & Lederer PartGmbB
(86) International application number: PCT/CN2024/072837
(87) International publication number: WO 2024/183480

(57) **Abstract**

Provided are an air conditioning system (100) of a vehicle, and a vehicle. The air conditioning system (100) of the vehicle includes: a compressor (101), a condenser (102), and an evaporator (103); a first throttle valve (201); and a heat exchange tube assembly (30) including a first heat exchange tube and a second heat exchange tube. The first heat exchange tube is selectively in communication with the evaporator (103). The second heat exchange tube is selectively in communication with the first throttle valve (201). A heat exchange medium in the first heat exchange tube exchanges heat with the heat exchange medium in the second heat exchange tube to reduce a temperature of the heat exchange medium flowing from the condenser (102) to the evaporator (103), and increase the temperature of the heat exchange medium flowing from the evaporator (103) to the compressor (101).

## Description

### CROSS-REFERENCE TO RELATED APPLICATION

This application claims priority to Chinese patent application No. 202310241178.4, titled "AIR CONDITIONING SYSTEM OF VEHICLE, AND VEHICLE", and filed on March 6, 2023, the entire contents of which are incorporated herein by reference.

### FIELD

The present disclosure relates to the field of vehicles, and particularly, to an air conditioning system of a vehicle, and a vehicle.

### BACKGROUND

In the related art, when a conventional air conditioning system of a vehicle uses a low-temperature gas (e.g., CO2) as a heat exchange medium, a heat exchange efficiency of the heat exchange medium is relatively low when exchanging heat with a condenser and an evaporator of the air conditioning system, which results in a small temperature change of the heat exchange medium after the heat exchange medium exchanges heat with the condenser and the evaporator. As a result, the air conditioning system has unsatisfactory cooling performance, which affects use experience of the air conditioning system and therefore diminishes ride comfort levels of the vehicle.

### SUMMARY

The present disclosure aims to solve at least one of the technical problems in the related art. To this end, an objective of the present disclosure is to provide an air conditioning system of a vehicle. The air conditioning system of the vehicle can enable a heat exchange medium to provide more cooling energy to an evaporator. The cooling energy of the heat exchange medium after exchanging heat with the evaporator can be effectively consumed. In this way, cooling performance of the air conditioning system can be improved, which improves use experience of the air conditioning system and therefore elevates ride comfort levels of the vehicle.

The present disclosure further provides a vehicle including the above-mentioned air conditioning system.

The air conditioning system of the vehicle of the present disclosure includes: a compressor, a condenser, and an evaporator, the compressor, the condenser, and the evaporator being adapted to be in communication with each other sequentially in series through a pipeline; a first throttle valve adapted to establish communication between the condenser and the evaporator, opening of the first throttle valve being adjustable to change a temperature and a pressure of a heat exchange medium passing through the first throttle valve; and a heat exchange tube assembly including a first heat exchange tube and a second heat exchange tube. One of the first heat exchange tube and the second heat exchange tube is sleeved outside another of the first heat exchange tube and the second heat exchange tube. The first heat exchange tube is in communication with a liquid inlet end of the compressor and selectively in communication with the evaporator. The second heat exchange tube is in communication with the condenser and selectively in communication with the first throttle valve. The heat exchange medium in the first heat exchange tube exchanges heat with the heat exchange medium in the second heat exchange tube to reduce the temperature of the heat exchange medium flowing from the condenser to the evaporator, and increase the temperature of the heat exchange medium flowing from the evaporator to the compressor.

With the air conditioning system of the present disclosure, by disposing the heat exchange tube assembly in the air conditioning system, the heat exchange medium after exchanging heat with the condenser and the heat exchange medium after exchanging heat with the evaporator can exchange heat within the heat exchange tube assembly when the air conditioning system operates in a cooling mode. As a result, the heat exchange medium can provide more cooling energy to the evaporator, and the cooling energy of the heat exchange medium after exchanging heat with the evaporator can be effectively consumed. In this way, the cooling performance of the air conditioning system can be improved, which improves the use experience of the air conditioning system and therefore elevates the ride comfort levels of the vehicle.

The vehicle of the present disclosure includes the above-mentioned air conditioning system.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

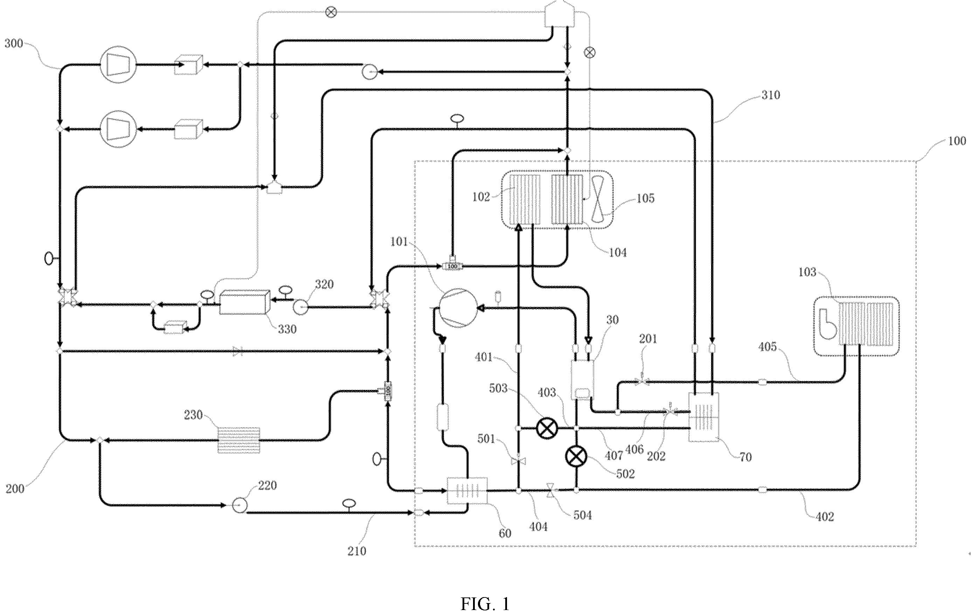

FIG. 1 is a schematic view of an air conditioning system mounted at a vehicle according to an embodiment of the present disclosure.

Reference numerals of the accompanying drawings:
100: air conditioning system; 200: interior heat exchange system; 210: second heat exchange medium flow path; 220: first hydraulic member; 230: interior heat exchanger;
300: battery cooling system; 310: fourth heat exchange medium flow path; 320: second hydraulic member; 330: battery heat exchanger;
101: compressor; 102: condenser; 103: evaporator; 104: heat dissipation member; 105: heat dissipation fan;
201: first throttle valve; 202: second throttle valve;
30: heat exchange tube assembly;
401: first communication flow path; 402: second communication flow path; 403: third communication flow path; 404: fourth communication flow path; 405: fifth communication flow path; 406: sixth communication flow path; 407: seventh communication flow path;
501: first communication valve; 502: second communication valve; 503: third communication valve; 504: fourth communication valve;
60: liquid gas cooler; 70: cooling member.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

An air conditioning system 100 of a vehicle according to an embodiment of the present disclosure is described below with reference to FIG. 1. The air conditioning system 100 is disposed at a vehicle and can provide cooling or heating for an interior environment of the vehicle to make a temperature inside the vehicle more comfortable, elevating ride comfort levels of the vehicle.

As illustrated in FIG. 1, the air conditioning system 100 according to the embodiment of the present disclosure includes a compressor 101, a condenser 102, an evaporator 103, a first throttle valve 201, and a heat exchange tube assembly 30. The compressor 101, the condenser 102, and the evaporator 103 are adapted to be in communication with each other sequentially in series through a pipeline. The pipeline contains a flowable heat exchange medium. The compressor 101 is configured to drive the heat exchange medium to circulate along a medium circuit in the air conditioning system 100. The heat exchange medium can transfer heat between the condenser 102 and the evaporator 103. In some embodiments, the condenser 102 can be in communication with an ambient environment outside the vehicle, and the evaporator 103 may be disposed inside the vehicle. When the heat exchange medium flows to the condenser 102 and a temperature difference exists between the heat exchange medium and the condenser 102, the heat exchange medium can exchange heat with the condenser 102. Specifically, when a temperature of the heat exchange medium is lower than that of the condenser 102, the heat exchange medium can absorb heat from the condenser 102. Conversely, when the temperature of the heat exchange medium is higher than that of the condenser 102, the heat exchange medium can release heat to the condenser 102. Similarly, when the heat exchange medium flows to the evaporator 103 and a temperature difference exists between the heat exchange medium and the evaporator 103, the heat exchange medium can exchange heat with the evaporator 103. Specifically, when the temperature of the heat exchange medium is lower than that of the evaporator 103, the heat exchange medium can absorb heat from the evaporator 103. Conversely, when the temperature of the heat exchange medium is higher than that of the evaporator 103, the heat exchange medium can release heat to the evaporator 103.

Additionally, the first throttle valve 201 is adapted to establish communication between the condenser 102 and the evaporator 103. An opening of the first throttle valve 201 is adjustable to change a temperature and a pressure of the heat exchange medium passing through the first throttle valve 201. When the first throttle valve 201 has a cross-sectional area smaller than a cross-sectional area of the pipeline between the condenser 102 and the evaporator 103, both the temperature and the pressure of the heat exchange medium decrease after passing through the first throttle valve 201. Further, by enabling the opening of the first throttle valve 201 to be adjustable, flow of the heat exchange medium between the condenser 102 and the evaporator 103 can be blocked when the first throttle valve 201 is completely closed.

The heat exchange tube assembly 30 includes a first heat exchange tube and a second heat exchange tube. One of the first heat exchange tube and the second heat exchange tube is sleeved outside another of the first heat exchange tube and the second heat exchange tube. That is, the first heat exchange tube may be sleeved outside the second heat exchange tube, or the second heat exchange tube may be sleeved outside the first heat exchange tube. The heat exchange medium in the first heat exchange tube can exchange heat with the heat exchange medium in the second heat exchange tube through a tube wall of the first heat exchange tube or a tube wall of the second heat exchange tube. In some embodiments, the first heat exchange tube and the second heat exchange tube may be coaxially arranged to achieve an optimal heat exchange efficiency. The first heat exchange tube is in communication with a liquid inlet end of the compressor 101 and selectively in communication with the evaporator 103. When the first heat exchange tube is in communication with the evaporator 103, the heat exchange medium can flow sequentially in a direction of: evaporator 103 - first heat exchange tube - compressor 101. The second heat exchange tube is in communication with the condenser 102 and selectively in communication with the first throttle valve 201. In a cooling mode of the air conditioning system 100, the heat exchange medium can flow from the condenser 102 towards the evaporator 103. By enabling communication between the second heat exchange tube and the first throttle valve 201, the heat exchange medium can flow sequentially in a direction of: condenser 102 - second heat exchange tube - first throttle valve 201 - compressor 101.

In this way, the heat exchange medium in the first heat exchange tube exchanges heat with the heat exchange medium in the second heat exchange tube to reduce the temperature of the heat exchange medium flowing from the condenser 102 to the evaporator 103, and increase the temperature of the heat exchange medium flowing from the evaporator 103 to the compressor 101. Specifically, in the cooling mode of the air conditioning system 100, the compressor 101 drives the high-temperature, high-pressure heat exchange medium to flow to the condenser 102. The heat exchange medium can release heat in the condenser 102. The air conditioning system 100 can further include a heat dissipation assembly. The heat dissipation assembly may include a heat dissipation member 104 (e.g., a heat dissipation fin) and a heat dissipation fan 105. After the condenser 102 exchanges heat with the heat exchange medium, the heat from the condenser 102 can be dissipated into the ambient environment through the heat dissipation assembly, lowering the temperature of the condenser 102 to allow continuous heat exchange with the heat exchange medium. After exchanging heat with the condenser 102, the heat exchange medium can pass through the second heat exchange tube and then through the first throttle valve 201. Both the pressure and the temperature of the heat exchange medium decrease when flowing through the first throttle valve 201. Since the temperature of the heat exchange medium is lower than that of the evaporator 103, the heat exchange medium can exchange heat with the evaporator 103 to transfer the cooling energy to the evaporator 103. Air flowing into the vehicle can exchange heat with the evaporator 103 when flowing through the evaporator 103, and thus a temperature of the air flowing into the vehicle is reduced. In this way, the temperature in the vehicle can be reduced, achieving a technical effect of cooling an interior of the vehicle by the air conditioning system 100.

The temperature of the heat exchange medium after exchanging heat with the evaporator 103 is increased, but is lower than the temperature of the heat exchange medium after exchanging heat with the condenser 102. When the heat exchange medium flows through the first heat exchange tube after exchanging heat with the evaporator 103, the heat exchange medium in the first heat exchange tube can exchange heat with the heat exchange medium in the second heat exchange tube. The heat exchange medium in the first heat exchange tube can absorb heat from the heat exchange medium in the second heat exchange tube, in such a manner that the temperature of the heat exchange medium after exchanging heat with the evaporator 103 can be increased while decreasing the temperature of the heat exchange medium after exchanging heat with the condenser 102. As a result, the heat exchange medium has a lower temperature and carries more cooling energy when the heat exchange medium flows from the condenser 102 to the evaporator 103, which can allow the heat exchange medium to release more cooling energy to the evaporator 103, improving a cooling efficiency of the air conditioning system 100. In addition, the temperature of the heat exchange medium is higher when the heat exchange medium flows from the evaporator 103 to the compressor 101, and the cooling energy of the heat exchange medium can be fully utilized, which can improve the heat exchange efficiency of the heat exchange medium in the air conditioning system 100, further improving the cooling efficiency of the air conditioning system 100.

In this way, by disposing the heat exchange tube assembly 30 in the air conditioning system 100, the heat exchange medium after exchanging heat with the condenser 102 and the heat exchange medium after exchanging heat with the evaporator 103 can exchange heat within the heat exchange tube assembly 30 when the air conditioning system 100 operates in the cooling mode. As a result, the heat exchange medium can provide more cooling energy to the evaporator 103, and the cooling energy of the heat exchange medium after exchanging heat with the evaporator 103 can be effectively consumed. In this way, cooling performance of the air conditioning system 100 can be improved, which improves use experience of the air conditioning system 100 and therefore elevates the ride comfort levels of the vehicle.

In some embodiments of the present disclosure, as illustrated in FIG. 1, the air conditioning system 100 can further include a first communication flow path 401 and a second communication flow path 402. The first communication flow path 401 is configured to establish communication between the compressor 101 and the condenser 102. In some embodiments, the first communication flow path 401 may be connected to a liquid outlet end of the compressor 101, and the compressor 101 can be configured to drive the heat exchange medium to flow along the first communication flow path 401 towards the condenser 102. The first communication flow path 401 is provided with a first communication valve 501. The first communication valve 501 is adapted to control selective communication between the compressor 101 and the condenser 102. Specifically, when open, the first communication valve 501 can establish communication in the first communication flow path 401, enabling the heat exchange medium to flow along the first communication flow path 401 towards the condenser 102. When closed, the first communication valve 501 can block the first communication flow path 401, preventing the heat exchange medium from flowing between the compressor 101 and the condenser 102.

Further, the second communication flow path 402 is configured to establish communication between the first heat exchange tube and the evaporator 103. The second communication flow path 402 is provided with a second communication valve 502. The second communication valve 502 is adapted to control selective communication between the first heat exchange tube and the evaporator 103. Specifically, when open, the second communication valve 502 can establish communication in the second communication flow path 402, enabling the heat exchange medium to flow along the second communication flow path 402 between the first heat exchange tube and the evaporator 103. When closed, the second communication valve 502 can block the second communication flow path 402, preventing the heat exchange medium from flowing between the first heat exchange tube and the evaporator 103.

In this way, through cooperation between the first communication flow path 401 and the second communication flow path 402, a cooling function of the air conditioning system 100 can be achieved. In the cooling mode of the air conditioning system 100, both the first communication valve 501 and the second communication valve 502 are open. The heat exchange medium can be driven by the compressor 101 to flow along the first communication flow path 401 to the condenser 102. The high-temperature, high-pressure heat exchange medium can be cooled in the condenser 102 to become the low-temperature, high-pressure heat exchange medium. The low-temperature, high-pressure heat exchange medium can then flow to the second heat exchange tube. The heat exchange medium in the first heat exchange tube exchanges heat with the heat exchange medium in the second heat exchange tube to further reduce the temperature of the heat exchange medium. By enabling the second heat exchange tube to be in communication with the first throttle valve 201, the heat exchange medium can flow to the first throttle valve 201. The first throttle valve 201 can reduce both the temperature and the pressure of the heat exchange medium, in such a manner that the heat exchange medium can be transformed into the low-temperature, low-pressure heat exchange medium. The low-temperature, low-pressure heat exchange medium can then flow to the evaporator 103 to exchange heat with the evaporator 103, in such a manner that the cooling energy is transferred to the evaporator 103 to lower the temperature of the evaporator 103, which can in turn lower the temperature of the air flowing through the evaporator 103. After exchanging heat with the evaporator 103, the heat exchange medium can flow along the second communication flow path 402 to the first heat exchange tube. Through heat exchange between the heat exchange medium in the first heat exchange tube and the heat exchange medium in the second heat exchange tube, the heat exchange medium after exchanging heat with the evaporator 103 can further reduce the temperature of the heat exchange medium flowing through the second heat exchange tube. After exchanging heat with the heat exchange medium in the second heat exchange tube, the heat exchange medium can flow to the compressor 101, achieving circulation of the heat exchange medium within piping of the air conditioning system 100. Through continuously driving, by the compressor 101, the heat exchange medium to flow, the air conditioning system 100 can achieve circulating cooling inside the vehicle.

In some embodiments of the present disclosure, as illustrated in FIG. 1, the air conditioning system 100 can further include a third communication flow path 403 and a fourth communication flow path 404. The third communication flow path 403 is configured to establish communication between the first communication flow path 401 and the second communication flow path 402. The heat exchange medium can be transmitted between the first communication flow path 401 and the second communication flow path 402 through the third communication flow path 403. The third communication flow path 403 is disposed at a side of the first communication valve 501 close to the condenser 102 and a side of the second communication valve 502 close to the heat exchange tube assembly 30. The third communication flow path 403 is provided with a third communication valve 503. The third communication valve 503 is adapted to control selective communication between the first communication flow path 401 and the second communication flow path 402. When the first communication valve 501 is closed, and both the second communication valve 502 and the third communication valve 503 are open, the second communication flow path 402 can transmit the heat exchange medium to a portion of a flow path between the first communication valve 501 and the condenser 102 through the third communication flow path 403. When the second communication valve 502 is closed, and both the first communication valve 501 and the third communication valve 503 are open, the first communication flow path 401 can transmit the heat exchange medium to a portion of a flow path between the second communication valve 502 and the first heat exchange tube through the third communication flow path 403. When closed, the third communication valve 503 can block the flow of the heat exchange medium between the first communication flow path 401 and the second communication flow path 402.

Further, the fourth communication flow path 404 is configured to establish communication between the first communication flow path 401 and the second communication flow path 402. The heat exchange medium can be transmitted between the first communication flow path 401 and the second communication flow path 402 through the fourth communication flow path 404. The fourth communication flow path 404 is disposed at a side of the first communication valve 501 close to the compressor 101 and a side of the second communication valve 502 close to the evaporator 103. The fourth communication flow path 404 is provided with a fourth communication valve 504. The fourth communication valve 504 is adapted to control selective communication between the first communication flow path 401 and the second communication flow path 402. When both the first communication valve 501 and the second communication valve 502 are closed and the fourth communication valve 504 is open, the second communication flow path 402 can transmit the heat exchange medium to a portion of a flow path between the first communication valve 501 and the compressor 101 through the fourth communication flow path 404. In this case, the compressor 101 can directly drive the heat exchange medium to flow towards the evaporator 103 through the fourth communication flow path 404 and the second communication flow path 402. When closed, the fourth communication valve 504 can block the flow of the heat exchange medium between the first communication flow path 401 and the second communication flow path 402.

In this way, through cooperation among the first communication flow path 401, the second communication flow path 402, the third communication flow path 403, and the fourth communication flow path 404, a heating function of the air conditioning system 100 can be achieved. In a heating mode of the air conditioning system 100, both the first communication valve 501 and the second communication valve 502 are closed, and both the third communication valve 503 and the fourth communication valve 504 are open. The heat exchange medium can be driven by the compressor 101 to flow to the evaporator 103 sequentially along a portion of the first communication flow path 401 between the compressor 101 and the first communication valve 501, the fourth communication flow path 404, and a portion of the second communication flow path 402 between the second communication valve 502 and the evaporator 103. The high-temperature, high-pressure heat exchange medium can exchange heat with the evaporator 103 to transfer the heat to the evaporator 103, which increases the temperature of the evaporator 103 and therefore raises the temperature of the air inside the vehicle that flows through the evaporator 103. The air inside the vehicle heated by the evaporator 103 can increase the temperature of the interior environment of the vehicle, achieving a technical effect of heating the interior environment of the vehicle by the air conditioning system 100.

In addition, after exchanging heat with the evaporator 103, the low-temperature, high-pressure heat exchange medium can flow towards the second heat exchange tube. By enabling the second heat exchange tube to be in communication with the first throttle valve 201, the heat exchange medium can flow through the first throttle valve 201 while flowing towards the second heat exchange tube. The first throttle valve 201 can reduce both the temperature and the pressure of the heat exchange medium, transforming the heat exchange medium into the low-temperature, low-pressure heat exchange medium. After passing through the second heat exchange tube, the low-temperature, low-pressure heat exchange medium can further flow to the condenser 102. The low-temperature, low-pressure heat exchange medium can exchange heat with the condenser 102 to absorb heat from the ambient environment via the condenser 102. The high-temperature, low-pressure heat exchange medium obtained after heat exchange with the condenser 102 can flow to the first heat exchange tube sequentially along a portion of the first communication flow path 401 between the condenser 102 and the first communication valve 501, the third communication flow path 403, and a portion of the second communication flow path 402 between the second communication valve 502 and the first heat exchange tube. The heat exchange medium after exchanging heat with the condenser 102 can pass through the first heat exchange tube and then flow to the compressor 101. In this way, the circulation of the heat exchange medium within the air conditioning system 100 can be realized. Through continuously driving, by the compressor 101, the heat exchange medium to flow, the air conditioning system 100 can achieve circulating heating inside the vehicle.

It should be noted that, when the air conditioning system 100 has the third communication flow path 403 and the fourth communication flow path 404, both the third communication valve 503 and the fourth communication valve 504 are closed when the air conditioning system 100 operates in the cooling mode. In this way, cross-flow of the heat exchange medium between the first communication flow path 401 and the second communication flow path 402 can be avoided to prevent a normal cooling operation of an air conditioner from being affected.

In some embodiments of the present disclosure, the air conditioning system 100 can further include a liquid gas cooler 60 configured to establish communication between the compressor 101 and the first communication flow path 401. The liquid gas cooler 60 has a first heat exchange medium flow path adapted to be in communication with a second heat exchange medium flow path 210 of an interior heat exchange system 200 of the vehicle in series. The heat exchange medium in the liquid gas cooler 60 flowing from the compressor 101 towards the first communication flow path 401 is adapted to exchange heat with the heat exchange medium in the first heat exchange medium flow path within the liquid gas cooler 60. In some embodiments, the second heat exchange medium flow path 210 of the interior heat exchange system 200 contains the flowing heat exchange medium. The heat exchange medium filled in the second heat exchange medium flow path 210 may be an ethylene glycol solution, water, a cooling oil, or the like. The interior heat exchange system 200 includes a first hydraulic member 220 and an interior heat exchanger 230. The first hydraulic member 220 may be constructed as a hydraulic pump, while the interior heat exchanger 230 may be constructed as a heat exchange fin. When the first heat exchange medium flow path is in communication with the second heat exchange medium flow path 210 of the interior heat exchange system 200 in series, the first hydraulic member 220, the liquid gas cooler 60, and the interior heat exchanger 230 are sequentially connected in series. The first hydraulic member 220 is capable of driving the heat exchange medium in the second heat exchange medium flow path 210 to circulate from the liquid gas cooler 60 towards the interior heat exchanger 230.

Since the high-temperature, high-pressure heat exchange medium flows from the compressor 101 towards the first communication flow path 401, by enabling the heat exchange medium flowing from the compressor 101 towards the first communication flow path 401 to exchange heat with the heat exchange medium in the second heat exchange medium flow path 210 when the air conditioning system 100 operates in the heating mode, the heat exchange medium flowing from the compressor 101 towards the first communication flow path 401 can transfer the heat to the heat exchange medium in the second heat exchange medium flow path 210. In this way, the temperature of the heat exchange medium in the second heat exchange medium flow path 210 is increased. Consequently, the heat exchange medium in the second heat exchange medium flow path 210 can exchange heat with the interior heat exchanger 230, causing a temperature of the interior heat exchanger 230 to increase. The interior heat exchanger 230 can heat the air inside the vehicle that flows through the interior heat exchanger 230. By using both the interior heat exchanger 230 and the evaporator 103 to heat the air inside the vehicle, the temperature inside the vehicle rises more quickly, which can improve a heating efficiency of the air conditioning system 100 to improve the use experience of the air conditioning system 100, further elevating the ride comfort levels of the vehicle.

Within an internal circulation air outlet duct of the vehicle, by positioning the interior heat exchanger 230 downstream of the evaporator 103 and through the cooperation between the first communication flow path 401 and the second communication flow path 402, a dehumidification function of the air conditioning system 100 can be achieved. In a dehumidification mode of the air conditioning system 100, both the first communication valve 501 and the second communication valve 502 are open, while both the third communication valve 503 and the fourth communication valve 504 are closed. The compressor 101 is capable of driving the heat exchange medium to flow through the liquid gas cooler 60. The high-temperature, high-pressure heat exchange medium driven by the compressor 101 can transfer the heat to the heat exchange medium in the second heat exchange medium flow path 210, increasing the temperature of the heat exchange medium in the second heat exchange medium flow path 210. Subsequently, the heat exchange medium in the second heat exchange medium flow path 210 can exchange heat with the interior heat exchanger 230, increasing the temperature of the interior heat exchanger 230. The interior heat exchanger 230 can then heat the air inside the vehicle that flows through the interior heat exchanger 230.

Further, after completing heat exchange within the liquid gas cooler 60 in the air conditioning system 100, the heat exchange medium can flow along the first communication flow path 401 to the condenser 102. The high-temperature, high-pressure heat exchange medium can be cooled to the low-temperature, high-pressure heat exchange medium in the condenser 102. The low-temperature, high-pressure heat exchange medium can flow to the second heat exchange tube. The heat exchange medium in the first heat exchange tube exchanges heat with the heat exchange medium in the second heat exchange tube to further reduce the temperature of the heat exchange medium. By enabling the second heat exchange tube to be in communication with the first throttle valve 201, the heat exchange medium can flow to the first throttle valve 201. The first throttle valve 201 can reduce both the temperature and the pressure of the heat exchange medium to transform the heat exchange medium into the low-temperature, low-pressure heat exchange medium. Then, the low-temperature, low-pressure heat exchange medium can flow to the evaporator 103, where the low-temperature, low-pressure heat exchange medium can exchange heat with the evaporator 103 to transfer the cooling energy to the evaporator 103, which lowers the temperature of the evaporator 103 and therefore lowers the temperature of the air flowing through the evaporator 103. As a result, moisture in the air flowing through the evaporator 103 can be condensed into water droplets to reduce a moisture content of the air flowing through the evaporator 103. Since the interior heat exchanger 230 is positioned downstream of the evaporator 103 in the internal circulation air outlet duct of the vehicle, the air having a reduced temperature after flowing through the evaporator 103 can be heated by the interior heat exchanger 230. The air discharged from the internal circulation air outlet duct into the interior environment of the vehicle has the temperature close to the temperature in the vehicle and reduced humidity, achieving a technical effect of dehumidifying the air inside the vehicle by an air conditioning device.

After exchanging heat with the evaporator 103, the heat exchange medium can flow along the second communication flow path 402 to the first heat exchange tube. Through the heat exchange between the heat exchange medium in the first heat exchange tube and the heat exchange medium in the second heat exchange tube, the heat exchange medium after exchanging heat with the evaporator 103 can further reduce the temperature of the heat exchange medium flowing through the second heat exchange tube. After exchanging heat with the heat exchange medium in the second heat exchange tube, the heat exchange medium can flow to the compressor 101, achieving the circulation of the heat exchange medium within the piping of the air conditioning system 100. Through continuously driving, by the compressor 101, the heat exchange medium to flow and driving, by the first hydraulic member 220, the heat exchange medium in the second heat exchange medium flow path 210 to circulate, the air conditioning system 100 can achieve circulating dehumidification of the air inside the vehicle.

In some embodiments of the present disclosure, as illustrated in FIG. 1, the air conditioning system 100 can further include a fifth communication flow path 405 configured to establish communication between the second heat exchange tube and the evaporator 103. The first throttle valve 201 can be disposed at the fifth communication flow path 405. In some embodiments, the heat exchange medium between the second heat exchange tube and the evaporator 103 can flow along the fifth communication flow path 405. By disposing the first throttle valve 201 at the fifth communication flow path 405, the first throttle valve 201 can control communication or blockage of the fifth communication flow path 405 by adjusting the opening of the first throttle valve 201. When closed, the first throttle valve 201 can block the fifth communication flow path 405, preventing the heat exchange medium from flowing between the second heat exchange tube and the evaporator 103. When open, the first throttle valve 201 can establish communication in the fifth communication flow path 405, which enables the heat exchange medium to flow between the second heat exchange tube and the evaporator 103, achieving selective communication between the second heat exchange tube and the evaporator 103. In addition, since the opening of the first throttle valve 201 is adjustable, by adjusting the opening of the first throttle valve 201, pressure and temperature changes of the heat exchange medium flowing between the second heat exchange tube and the evaporator 103 can be adjusted when the heat exchange medium flows through the first throttle valve 201, making the pressure and temperature changes of the heat exchange medium more suitable and improving the heat exchange efficiency of the air conditioning system 100.

In some embodiments of the present disclosure, the air conditioning system 100 can further include a cooling member 70 having a third heat exchange medium flow path. The third heat exchange medium flow path is adapted to be in communication with a fourth heat exchange medium flow path 310 of a battery cooling system 300 of the vehicle in series. The cooling member 70 is selectively in communication with the second heat exchange tube and is in communication with the first heat exchange tube. The heat exchange medium in the liquid gas cooler 60 flowing from the second heat exchange tube towards the first heat exchange tube is adapted to exchange heat with the heat exchange medium in the third heat exchange medium flow path within the liquid gas cooler 60. In some embodiments, the fourth heat exchange medium flow path 310 of the battery cooling system 300 contains the flowing heat exchange medium. The heat exchange medium filled in the fourth heat exchange medium flow path 310 may be an ethylene glycol solution, water, a cooling oil, or the like. The battery cooling system 300 includes a second hydraulic member 320 and a battery heat exchanger 330. The second hydraulic member 320 may be constructed as a hydraulic pump, while the battery heat exchanger 330 may be constructed as a liquid-cooled plate or the like. When the third heat exchange medium flow path is in communication with the fourth heat exchange medium flow path 310 of the battery cooling system 300 in series, the second hydraulic member 320, the cooling member 70, and the battery heat exchanger 330 are sequentially connected in series. The second hydraulic member 320 is capable of driving the heat exchange medium in the fourth heat exchange medium flow path 310 to circulate from the cooling member 70 towards the battery heat exchanger 330.

Therefore, through the cooperation between the first communication flow path 401 and the second communication flow path 402 and by enabling the heat exchange medium in the air conditioning system 100 to exchange heat with the heat exchange medium in the battery cooling system 300 within the cooling member 70, a battery cooling function of the air conditioning system 100 can be achieved. In a battery cooling mode of the air conditioning system 100, both the first communication valve 501 and the second communication valve 502 are open, while both the third communication valve 503 and the fourth communication valve 504 are closed. The compressor 101 is capable of driving the heat exchange medium to flow along the first communication flow path 401 to the condenser 102. The high-temperature, high-pressure heat exchange medium can be cooled to the low-temperature, high-pressure heat exchange medium in the condenser 102. The low-temperature, high-pressure heat exchange medium can flow to the second heat exchange tube. The heat exchange medium in the first heat exchange tube exchanges heat with the heat exchange medium in the second heat exchange tube to further reduce the temperature of the heat exchange medium. In some embodiments, a second throttle valve 202 is disposed between the second heat exchange tube and the cooling member 70. By enabling communication between the second heat exchange tube and the second throttle valve 202 and closing the first throttle valve 201, the heat exchange medium cannot flow towards the evaporator 103, but instead flows to the second throttle valve 202. The second throttle valve 202 can reduce both the temperature and the pressure of the heat exchange medium to transform the heat exchange medium into the low-temperature, low-pressure heat exchange medium. Then, the low-temperature, low-pressure heat exchange medium can flow to the cooling member 70, where the low-temperature, low-pressure heat exchange medium in the air conditioning system 100 can exchange heat with the heat exchange medium in the battery cooling system 300.

Inside the cooling member 70, the temperature of the heat exchange medium in the air conditioning system 100 is lower than that of the heat exchange medium in the battery cooling system 300. The heat exchange medium in the air conditioning system 100 can transfer the cooling energy to the heat exchange medium in the battery cooling system 300 to lower the temperature of the heat exchange medium in the battery cooling system 300. Subsequently, the heat exchange medium in the battery cooling system 300, after exchanging heat with the heat exchange medium in the air conditioning system 100, can flow to the battery heat exchanger 330. The heat exchange medium in the battery cooling system 300 can exchange heat with the battery heat exchanger 330 to reduce a temperature of the battery heat exchanger 330, in such a manner that the battery heat exchanger 330 can cool the battery of the vehicle, enabling the battery of the vehicle to operate at an appropriate temperature. Therefore, the heat generated by the battery of the vehicle can be transferred to the heat exchange medium in the battery cooling system 300 through the battery heat exchanger 330, and the heat exchange medium in the battery cooling system 300 can transfer the heat generated by the battery of the vehicle to the heat exchange medium in the air conditioning system 100 through the cooling member 70.

After completing heat exchange in the cooling member 70, the heat exchange medium in the air conditioning system 100 can flow to the first heat exchange tube. Through the heat exchange between the heat exchange medium in the first heat exchange tube and the heat exchange medium in the second heat exchange tube, the heat exchange medium in the air conditioning system 100 that has completed the heat exchange in the cooling member 70 can further reduce the temperature of the heat exchange medium flowing through the second heat exchange tube. The heat exchange medium after exchanging heat with the heat exchange medium in the second heat exchange tube can flow to the compressor 101, achieving the circulation of the heat exchange medium within the piping of the air conditioning system 100. Through continuously driving, by the compressor 101, the heat exchange medium to flow, the air conditioning system 100 can achieve circulating cooling of the battery of the vehicle.

In some other embodiments of the present disclosure, the cooling member 70 is selectively in communication with the evaporator 103 and is in communication with the first heat exchange tube. The heat exchange medium in the liquid gas cooler 60 flowing from the evaporator 103 towards the first heat exchange tube is adapted to exchange heat with the heat exchange medium in the third heat exchange medium flow path within the liquid gas cooler 60. Therefore, through cooperation among the first communication flow path 401, the second communication flow path 402, the third communication flow path 403, and the fourth communication flow path 404, and enabling the heat exchange medium in the air conditioning system 100 to exchange heat with the heat exchange medium in the battery cooling system 300 within the cooling member 70, a residual heat utilization function of the air conditioning system 100 can be achieved. In a residual heat utilization mode of the air conditioning system 100, the first communication valve 501, the second communication valve 502, and the third communication valve 503 are all closed, while the fourth communication valve 504 is open.

The heat exchange medium can be driven by the compressor 101 to flow to the evaporator 103 sequentially along the portion of the first communication flow path 401 between the compressor 101 and the first communication valve 501, the fourth communication flow path 404, and the portion of the second communication flow path 402 between the second communication valve 502 and the evaporator 103. The high-temperature, high-pressure heat exchange medium can exchange heat with the evaporator 103 to transfer the heat to the evaporator 103, which increases the temperature of the evaporator 103 and therefore raises the temperature of the air inside the vehicle that flows through the evaporator 103. The air inside the vehicle heated by the evaporator 103 can increase the temperature of the interior environment of the vehicle, achieving the technical effect of heating the interior environment of the vehicle by the air conditioning system 100.

Further, by enabling communication between the cooling member 70 and the evaporator 103, the low-temperature, high-pressure heat exchange medium can flow towards the cooling member 70 after exchanging heat with the evaporator 103. The low-temperature heat exchange medium in the air conditioning system 100 can exchange heat with the heat exchange medium in the battery cooling system 300 within the cooling member 70. Inside the cooling member 70, the temperature of the heat exchange medium in the air conditioning system 100 is lower than that of the heat exchange medium in the battery cooling system 300. The heat exchange medium in the battery cooling system 300 can transfer the heat to the heat exchange medium in the air conditioning system 100 to lower the temperature of the heat exchange medium in the battery cooling system 300. Subsequently, the heat exchange medium in the battery cooling system 300, after exchanging heat with the heat exchange medium in the air conditioning system 100, can flow to the battery heat exchanger 330. The heat exchange medium in the battery cooling system 300 can exchange heat with the battery heat exchanger 330 to reduce the temperature of the battery heat exchanger 330, in such a manner that the battery heat exchanger 330 can cool the battery of the vehicle, enabling the battery of the vehicle to operate at the appropriate temperature. Therefore, the heat generated by the battery of the vehicle can be transferred to the heat exchange medium in the battery cooling system 300 through the battery heat exchanger 330, and the heat exchange medium in the battery cooling system 300 can transfer the heat generated by the battery of the vehicle to the heat exchange medium in the air conditioning system 100 through the cooling member 70.

After completing the heat exchange in the cooling member 70, the heat exchange medium in the air conditioning system 100 can flow to the first heat exchange tube. The heat exchange medium in the air conditioning system 100 that has completed the heat exchange in the cooling member 70 can flow to the compressor 101 after passing through the second heat exchange tube, achieving the circulation of the heat exchange medium within the piping of the air conditioning system 100. Through cooperation between the air conditioning system 100 and the battery cooling system 300, the heat generated by the battery during operation can be transferred to the evaporator 103 through the battery cooling system 300 and the air conditioning system 100. That is, the heat generated by the battery during operation can be used to heat the air inside the vehicle. Therefore, the vehicle can effectively utilize thermal energy generated by the battery to reduce heating power consumption of the air conditioning system 100, which can improve fuel economy of the vehicle, enhancing competitiveness of the vehicle. Through continuously driving, by the compressor 101, the heat exchange medium to flow, the air conditioning system 100 can achieve an effect of utilizing residual heat from the battery of the vehicle.

In some embodiments of the present disclosure, as illustrated in FIG. 1, the air conditioning system 100 can further include a sixth communication flow path 406 and a seventh communication flow path 407. The sixth communication flow path 406 is configured to establish communication between the fifth communication flow path 405 and the cooling member 70. The sixth communication flow path 406 can selectively bring the cooling member 70 into communication with the second heat exchange tube or the evaporator 103 through the fifth communication flow path 405. Specifically, when both the first communication valve 501 and the third communication valve 503 are closed, and the first throttle valve 201 is open, the cooling member 70 can be in communication with the evaporator 103, allowing the heat exchange medium to be transmitted between cooling member 70 and the evaporator 103. Additionally, an outer flow path of the condenser 102 is blocked, which prevents communication between the condenser 102 and the cooling member 70, and thus the second heat exchange tube is not in communication with the cooling member 70. When either the first communication valve 501 or the third communication valve 503 is open, and the first throttle valve 201 is closed, the first throttle valve 201 can block the flow path between the cooling member 70 and the evaporator 103, preventing the transfer of the heat exchange medium between the cooling member 70 and the evaporator 103. Further, the outer flow path of the condenser 102 allows passage, in such a manner that the condenser 102 can be in communication with the cooling member 70 through the second heat exchange tube.

Further, the sixth communication flow path 406 may be disposed at a side of the first throttle valve 201 close to the heat exchange tube assembly 30 and may be provided with the second throttle valve 202. In the residual heat utilization mode of the air conditioning system 100, this design allows the heat exchange medium to pass through the first throttle valve 201 and the second throttle valve 202 sequentially when flowing from the evaporator 103 to the cooling member 70. Cooperation between the first throttle valve 201 and the second throttle valve 202 can effectively reduce the temperature and the pressure of the heat exchange medium flowing to the cooling member 70, which can enable the heat exchange medium to absorb heat effectively within the cooling member 70. In this way, the temperature of the heat exchange medium in the battery cooling system 300 can be efficiently reduced, improving a cooling effect of the battery cooling system 300 on the battery of the vehicle.

In addition, the seventh communication flow path 407 is configured to establish communication between the second communication flow path 402 and the cooling member 70. The seventh communication flow path 407 is disposed at a side of the second communication valve 502 close to the heat exchange tube assembly 30. The seventh communication flow path 407 can bring the cooling member 70 into communication with the first heat exchange tube through the second communication flow path 402. Of course, in some other embodiments, the first heat exchange tube may have a plurality of interfaces to allow the seventh communication flow path 407 to be directly connected to the first heat exchange tube. Through cooperation between the sixth communication flow path 406 and the seventh communication flow path 407, the cooling member 70 can be connected in parallel to a medium circuit formed by the compressor 101, the condenser 102, and the evaporator 103. In this way, vehicle manufacturers can mount the cooling member 70 in the air conditioning system 100 as needed, meaning that the air conditioning system 100 has satisfactory scalability.

In some embodiments of the present disclosure, the heat exchange medium in the air conditioning system 100 is configured to be a CO2 medium. That is, the air conditioning system 100 can use CO2 as the heat exchange medium. Compared with using R134a (1,1,1,2-tetrafluoroethane) or R1234yf as the heat exchange medium, CO2 has a lower saturation temperature at 1 MPa.A. When the air conditioning system 100 operates in the heating mode under a low-temperature environment, the heat exchange medium can absorb heat from the external low-temperature environment. In some embodiments, CO2 has the saturation temperature of -40°C at 1 MPa.A. The heat exchange medium can absorb heat from a low-temperature environment of -25°C. A temperature at an air outlet of the air conditioning system 100 inside the vehicle can reach 30°C. In this way, a quantity of Positive Temperature Coefficient (PTC) heaters required in the air conditioning system 100 to heat the heat exchange medium in the low-temperature environment can be reduced, lowering manufacturing costs and energy consumption of the air conditioning system 100.

Of course, the air conditioning system 100 of the present disclosure is also suitable for using an r134a medium, r1234yf, or a mixed medium as the heat exchange medium. When the heat exchange medium is the r134a medium, r1234yf, or the mixed medium, by disposing the heat exchange tube assembly 30 in the air conditioning system 100, the heat exchange medium after exchanging heat with the condenser 102 and the heat exchange medium after exchanging heat with the evaporator 103 can exchange heat within the heat exchange tube assembly 30 when the air conditioning system 100 operates in the cooling mode. As a result, the heat exchange medium can provide more cooling energy to the evaporator 103, and the cooling energy of the heat exchange medium after exchanging heat with the evaporator 103 can be effectively consumed. In this way, the cooling performance of the air conditioning system 100 can be improved, which improves the use experience of the air conditioning system 100 and therefore elevates the ride comfort levels of the vehicle.

In some embodiments of the present disclosure, some parts of the air conditioning system 100 may be pre-assembled into modules. For example, the liquid gas cooler 60, the cooling member 70, the heat exchange tube assembly 30, multiple communication valves, and multiple communication flow paths may be pre-connected and assembled into a module. Interfaces for connecting to remaining parts of the air conditioning system 100 can be reserved on the module. In this way, an assembly efficiency of the air conditioning system 100 on the vehicle can be improved.

The vehicle according to the embodiments of the present disclosure includes the air conditioning system 100 according to the above embodiments. The air conditioning system 100 is disposed at the vehicle. By disposing the heat exchange tube assembly 30 in the air conditioning system 100, the heat exchange medium after exchanging heat with the condenser 102 and the heat exchange medium after exchanging heat with the evaporator 103 can exchange heat within the heat exchange tube assembly 30 when the air conditioning system 100 operates in the cooling mode. As a result, the heat exchange medium can provide more cooling energy to the evaporator 103, and the cooling energy of the heat exchange medium after exchanging heat with the evaporator 103 can be effectively consumed. In this way, the cooling performance of the air conditioning system 100 can be improved, which improves the use experience of the air conditioning system 100 and therefore elevates the ride comfort levels of the vehicle.

Reference throughout this specification to "an embodiment", "some embodiments", "an illustrative embodiment", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. An air conditioning system (100) of a vehicle, the air conditioning system (100) comprising:
a compressor (101), a condenser (102), and an evaporator (103), the compressor (101), the condenser (102), and the evaporator (103) being adapted to be in communication with each other sequentially in series through a pipeline;
a first throttle valve (201) adapted to establish communication between the condenser (102) and the evaporator (103), an opening of the first throttle valve (201) being adjustable to change a temperature and a pressure of a heat exchange medium passing through the first throttle valve (201); and
a heat exchange tube assembly (30) comprising a first heat exchange tube and a second heat exchange tube, wherein:
one of the first heat exchange tube and the second heat exchange tube is sleeved outside another of the first heat exchange tube and the second heat exchange tube;
the first heat exchange tube is in communication with a liquid inlet end of the compressor (101) and selectively in communication with the evaporator (103); and
the second heat exchange tube is in communication with the condenser (102) and selectively in communication with the first throttle valve (201);
wherein the heat exchange medium in the first heat exchange tube exchanges heat with the heat exchange medium in the second heat exchange tube to reduce the temperature of the heat exchange medium flowing from the condenser (102) to the evaporator (103), and increase the temperature of the heat exchange medium flowing from the evaporator (103) to the compressor (101).

2. The air conditioning system (100) according to claim 1, further comprising:
a first communication flow path (401) configured to establish communication between the compressor (101) and the condenser (102), the first communication flow path (401) being provided with a first communication valve (501), the first communication valve (501) being adapted to control selective communication between the compressor (101) and the condenser (102); and
a second communication flow path (402) configured to establish communication between the first heat exchange tube and the evaporator (103), the second communication flow path (402) being provided with a second communication valve (502), the second communication valve (502) being adapted to control selective communication between the first heat exchange tube and the evaporator (103).

3. The air conditioning system (100) according to claim 2, further comprising:
a third communication flow path (403) configured to establish communication between the first communication flow path (401) and the second communication flow path (402), the third communication flow path (403) being disposed at a side of the first communication valve (501) close to the condenser (102) and a side of the second communication valve (502) close to the heat exchange tube assembly (30), and the third communication flow path (403) being provided with a third communication valve (503), the third communication valve (503) being adapted to control selective communication between the first communication flow path (401) and the second communication flow path (402); and
a fourth communication flow path (404) configured to establish communication between the first communication flow path (401) and the second communication flow path (402), the fourth communication flow path (404) being disposed at a side of the first communication valve (501) close to the compressor (101) and a side of the second communication valve (502) close to the evaporator (103), and the fourth communication flow path (404) being provided with a fourth communication valve (504), the fourth communication valve (504) being adapted to control selective communication between the first communication flow path (401) and the second communication flow path (402).

4. The air conditioning system (100) according to claim 2, further comprising:
a liquid gas cooler (60) configured to establish communication between the compressor (101) and the first communication flow path (401), the liquid gas cooler (60) having a first heat exchange medium flow path adapted to be in communication with a second heat exchange medium flow path (210) of an interior heat exchange system (200) of the vehicle in series, wherein:
the heat exchange medium in the liquid gas cooler (60) flowing from the compressor (101) towards the first communication flow path (401) is adapted to exchange heat with the heat exchange medium in the first heat exchange medium flow path within the liquid gas cooler (60).

5. The air conditioning system (100) according to claim 4, further comprising:
a fifth communication flow path (405) configured to establish communication between the second heat exchange tube and the evaporator (103), the first throttle valve (201) being disposed at the fifth communication flow path (405).

6. The air conditioning system (100) according to claim 5, further comprising:
a cooling member (70) having a third heat exchange medium flow path, the third heat exchange medium flow path being adapted to be in communication with a fourth heat exchange medium flow path (310) of a battery cooling system (300) of the vehicle in series, and the cooling member (70) being selectively in communication with the second heat exchange tube and being in communication with the first heat exchange tube, wherein:
the heat exchange medium in the liquid gas cooler (60) flowing from the second heat exchange tube towards the first heat exchange tube is adapted to exchange heat with the heat exchange medium in the third heat exchange medium flow path within the liquid gas cooler (60).

7. The air conditioning system (100) according to claim 6, further comprising:
a cooling member (70) having a third heat exchange medium flow path, the third heat exchange medium flow path being adapted to be in communication with a fourth heat exchange medium flow path (310) of a battery cooling system (300) of the vehicle in series, and the cooling member (70) being selectively in communication with the evaporator (103) and being in communication with the first heat exchange tube, wherein:
the heat exchange medium in the liquid gas cooler (60) flowing from the evaporator (103) towards the first heat exchange tube is adapted to exchange heat with the heat exchange medium in the third heat exchange medium flow path within the liquid gas cooler (60).

8. The air conditioning system (100) according to claim 6 or 7, further comprising:
a sixth communication flow path (406) configured to establish communication between the fifth communication flow path (405) and the cooling member (70), the sixth communication flow path (406) being disposed at a side of the first throttle valve (201) close to the heat exchange tube assembly (30), and the sixth communication flow path (406) being provided with a second throttle valve (202); and
a seventh communication flow path (407) configured to establish communication between the second communication flow path (402) and the cooling member (70), the seventh communication flow path (407) being disposed at a side of the second communication valve (502) close to the heat exchange tube assembly (30).

9. The air conditioning system (100) according to any one of claims 1 to 7, wherein the heat exchange medium in the air conditioning system (100) is configured to be a CO2 medium, an R134a medium, an R1234yf, or a mixed medium.

10. A vehicle, comprising the air conditioning system (100) according to any one of claims 1 to 9.
